# EUROPÄISCHE PATENTSCHRIFT

(11) **EP 0 466 957 B1**
(45) Veröffentlichungstag und Bekanntmachung des Hinweises auf die Patenterteilung: **30.11.1994**
(21) Anmeldenummer: 90113829.7
(22) Anmeldetag: 19.07.1990
(51) Int. Cl.: A01C 3/02, C02F 3/20, B01F 3/04

(54) **Vorrichtung zur Aufbereitung von Abwässern**
Device for waste water treatment
Dispositif pour le traitement d'eaux usées

(43) Veröffentlichungstag der Anmeldung: 22.01.1992
(73) Patentinhaber: ARNOLD AG, CH-6105 Schachen (CH)
(72) Erfinder: Arnold, Eduard, CH-6105 Schachen (CH)
(74) Vertreter: Arato, Laszlo

(56) Entgegenhaltungen:
- EP-A- 0 221 354
- US-A- 3 206 176
- PATENT ABSTRACTS OF JAPAN vol. 13, no. 95 (C-537)(3443) 06 März 1989,& JP-A-63 274496 (MASASHI TSUCHIDA) 11 November 1988,

## Beschreibung

Die Erfindung betrifft eine Vorrichtung zur Aufbereitung von Abwässern, insbesondere landwirtschaftlicher Art, wie Gülle, gemäss den kennzeichnenden Merkmalen des Anspruchs 1.

Aus der EP-A-0221354 ist eine solche Vorrichtung zur Abwasserbegasung bekannt. Die Vorrichtung weist eine von einem Tauchantrieb angetriebene Hohlwelle auf, die an ihrem Ende ein Mischorgan trägt. Dem durch die Welle hindurchführenden Luftkanal wird von einem Gebläse Druckluft zugeführt.
Aus der DE 36 21 903 ist eine Vorrichtung mit einem Tauchantrieb mit Rührrotor und einer Ringkammer, die koaxial um den Rührer angeordnet ist, und eine Ansaugleitung an der Ringkammer aufweist, bekannt. Da die Antriebe hochtourig sind (1500 UpM), sind die Rührwerkdurchmesser klein. Die Rühreffekte sind am besten, wenn die Luftzufuhr ungehindert und somit ganz offen ist. Zuviel Luft führt aber zum Aufschäumen des Mediums und zum Austreiben des Ammoniaks. Zuwenig Rühreffekt führt wiederum zu Ablagerungen und begünstigt die Bildung von Fäulnis durch anaerobe Kleinlebewesen.
Aus der CH 665 567 ist eine Vorrichtung, mit einem Tauchantrieb und einer Venturi-Düse die Luft mitreisst, und koxial um den Rühwerkwelle angeordnet ist und eine Ansaugleitung an der Venturi-Düse aufweist bekannt. Da der Tauchantrieb mit Untersetzungsgetriebe, und einem der niedrigeren Drehzahl angepassten Rührwerk mit grösserem Aussendurchmesser ausgestattet ist, ermöglicht es die ideale Aufbereitung des Mediums.

Da die Nachteile der preiswerten Vorrichtungen gewaltig sind und die Vorteile der Vorrichtung die vom Betriebsverhalten her ideal, aber wegen des hohen technischen Aufwands zu teuer in der Anschaffung und auch im Betrieb ist, stellt sich die vorliegende Erfindung die Aufgabe, die genannten Nachteile zu beseitigen.
Erfindungsgemäss wird diese Aufgabe gelöst durch die kennzeichnenden Merkmale des Anspruchs 1.
Anhand der beiliegenden Zeichnung wird die Erfindung beispielsweise erläutert. Dabei wird von der Vorrichtung nur der für die Erfindung relevante Teil gezeigt nämlich;

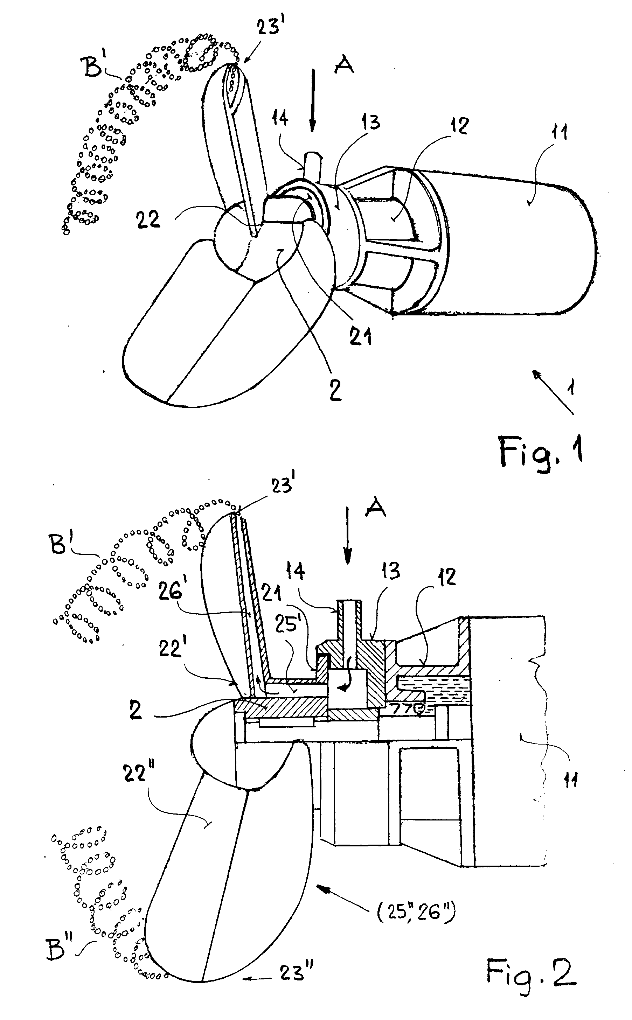

- Fig.1: eine räumliche Ansicht vom Propellertauchrührwerk
- Fig.2: ein Längsschnitt vom Propellertauchrührwerk.
Das in den Figuren gezeigte Propellertauchrührwerk 1 besteht aus dem Tauchantrieb 11 mit Wellenstumpf 11', Keil 11'', dem mit Sperrflüssigkeit gefüllten Dichtungsgehäuse 12 mit diversen Wellendichtungen, sowie einem an diese, durch nicht gezeigte Mittel, angebauter Ringkanal 13, und der Propeller aus Propellernabe 2, Propellerkegel 2' mit Befestigung, sowie Propellerblätter 22',22'', und eine flanschförmige Verbreiterung der Propellernabe 2, die als Abschlusswand 21 des Ringkanals 13 dient. Die Luft "A" wird durch eine nicht gezeigte Leitung zum Luftanschluss 14 geführt, und durch die Kavitäten 25',25'' der Propellernabe 2, und die Kavitäten 26', 26'' der Propellerblätter 22',22'' zu den Propellerblattspitzen 23',23'' geleitet. Im Betrieb erzwingen die Propellerblätter 22' und 22'' etsprechend des Schraubenschubes die Strömung des Mediums. An den Propellerblattspitzen 23',23'' findet zwischen der Propellerunter- und Oberseite ein Druckausgleich statt, wobei entsprechend der Tragflügeltheorie für endliche Fügel, ein Randwirbel entsteht. Dieser als induzierter Widerstand bekannte Druckverlust bewirkt die Entstehung der Wirbelzöpfe B',B'' die der Schraubenlinie des Schraubenschubes der Strömung überlagert sind. Die in Form feinster Bläschen in das Medium austretende Luft wird entsprechend diesen überlagerten Strömungslinien in das Medium gemischt. Die Vorteile des langen Wirbelweges, wie die der feinsten Grösse der Bläschen, die auf eine Andere Art, ohne die Gefahr der Verstopfung, nicht zu realisieren war, liegt auf der Hand. Da die Grösse der Öffnungen an den Propellerblattspitzen 23',24'' von der Grösse der Luftblasen unabhängig ist und daher gross genug gewählt werden kann um nicht zu verstopfen, und durch das Wegschleudern die Gefahr von Ablagerungen in dieser Region ohnehin gering ist, gilt die vorgeschlagene Vorrichtung als sicher gegen Verstopfung. Diese Eigenschaft, sowie die hervorragende Förderleistung, die von der Drosselung der Luftzufuhr unabhängig ist, erlaubt die intermitierende Betriebsart, mit allen Vorteilen des Energiesparens.

## Patentansprüche

1. Vorrichtung zur Aufbereitung und Belüftung von Abwässern, insbesondere landwirtschaftlicher Art, wie Jauche und Gülle, bestehend aus einem Tauchantrieb (11) mit Dichtungsgehäuse (12) welches einen Ringkanal (13) mit Luftanschluss (14) aufweist, und aus einem vom Tauchantrieb angetriebenen Wellenstumpf (11') mit einem Mischorgan an seinem Ende, dadurch gekennzeichnet, dass der Wellenstumpf (11') des Tauchantriebes (11) eine Propellernabe (2) mit Propellerblättern (22',22'') mit Kavitäten (26',26'') trägt und die Propellernabe mit einem Flansch (21) versehen ist, welcher als Abschlusswand des Ringkanals (13) dient, und dessen Kavitäten (25',25'') mit den Kavitäten (26',26'') der Propellerblätter (22',22'') verbunden sind, welche als Zuleitungen der Luft vom Ringkanal (13) bis zu den Propellerblattspitzen (23',23'') führen.

2. Vorrichtung nach Anspruch 1, dadurch gekennzeichnet, dass die Vorrrichtung 1 an eine Halterung angebaut wird.

## Claims

1. Apparatus for treating and aerating waste water, in particular of the agricultural type, such as liquid muck and manure, comprising an immersed drive (11) with sealing housing (12), which has an annular channel (13) with air connection point (14), and comprising a shaft butt (11') driven by the immersed drive and having a mixing member at its end, characterized in that the shaft butt (11') of the immersed drive (11) bears a propeller boss (2) with propeller blades (22', 22'') having cavities (26', 26'') and the propeller boss is provided with a flange (21) which serves as the terminating wall of the annular channel (13), and whereof the cavities (25', 25'') are connected to the cavities (26', 26'') of the propeller blades (22', 22''), which, as supply lines of the air, lead from the annular channel (13) to the tips (23', 23'') of the propeller blades.

2. Apparatus according to Claim 1, characterized in that the apparatus 1 is built onto a mounting.

## Revendications

1. Dispositif pour le traitement et l'aération d'eaux usées, en particulier de type agricole, telles que du purin et du lisier, constitué par une commande d'immersion (11) comprenant un logement d'étanchéification (12) qui présente un canal annulaire (13) muni d'une prise d'air (14), et par un bout d'arbre (11') entraîné par la commande d'immersion, muni d'un organe de mélange à son extrémité, caractérise en ce que le bout d'arbre (11') de la commande d'immersion (11) porte un moyeu d'hélice (2) muni de pales d'hélice (22', 22'') à cavités (26', 26'') et le moyeu d'hélice est muni d'une bride (21), qui sert de paroi d'obturation pour le canal annulaire (13), et dont les cavités (25', 25'') sont reliées aux cavités (26', 26'') des pales d'hélice (22', 22''), qui guident l'air à la manière de conduits depuis le canal annulaire (13) jusqu'aux extrémités (23', 23'') des pales d'hélice.

2. Dispositif selon la revendication 1, caractérisé en ce que le dispositif 1 est monté contre un dispositif de fixation.
